# EUROPÄISCHE PATENTSCHRIFT

(11) **EP 3 119 554 B1**
(45) Veröffentlichungstag und Bekanntmachung des Hinweises auf die Patenterteilung: **24.07.2019**
(21) Anmeldenummer: 15708161.3
(22) Anmeldetag: 26.02.2015
(51) Int. Cl.: B23K 35/14, H01R 4/02

(54) **VERFAHREN UND VORRICHTUNG ZUM GLEICHMÄSSIGEN BESCHICHTEN EINES METALLISCHEN ODER METALLISIERTEN GEWEBESCHLAUCHES**
METHOD AND APPARATUS FOR UNIFORMLY COATING A METALLIC OR METALLIZED BRAIDED HOSE
PROCÉDÉ ET DISPOSITIF DE REVÊTEMENT UNIFORME D'UN TUYAU TISSÉ MÉTALLIQUE OU MÉTALLISÉ

(30) Priorität: 19.03.2014 DE 102014003904; 14.04.2014 DE 102014005494
(43) Veröffentlichungstag der Anmeldung: 25.01.2017
(73) Patentinhaber: FEW Fahrzeugelektrikwerk GmbH & Co. KG, 04442 Zwenkau (DE)
(72) Erfinder: HARTMANN, Werner, 04205 Leipzig (DE); BEESE, Daniela, 04523 Pegau (DE)
(74) Vertreter: Kruspig, Volkmar
(86) Internationale Anmeldenummer: PCT/EP2015/054054
(87) Internationale Veröffentlichungsnummer: WO 2015/139928

(56) Entgegenhaltungen:
- EP-A1- 0 711 628
- US-A- 1 980 890
- US-B1- 6 730 848

## Beschreibung

Die Erfindung betrifft ein Verfahren zum gleichmäßigen Beschichten eines metallischen oder metallisierten Gewebeschlauches mit einem Lot oder einem Lot- und Flussmittel gemäß Oberbegriff des Anspruchs 1 sowie eine Vorrichtung zur Durchführung des Verfahrens nach Anspruch 6.

Bekannte Bandlitzen bestehen aus einem metallischen Gewebeschlauch, insbesondere Kupfergewebe, der nach Kundenwunsch auf Breite und Höhe gewalzt wird. Bandlitzen können unter Nutzung textilüblicher Technologien, d.h. auf der Basis von Webverfahren, hergestellt werden und verfügen über eine hohe Flexibilität und je nach Dimensionierungen ausreichende Stromtragfähigkeit bzw. einen geringen Ohmschen Widerstand.

Bandlitzenleiter kommen bei elektrischen Geräten und Apparaten insbesondere auch dann zur Anwendung, wenn bewegte Teile kontaktiert werden müssen und/oder in Fällen, bei denen eine hohe mechanische Schwingungsbelastung vorliegt.

Zum Erhalt sicherer stoffschlüssiger Verbindungen, insbesondere Lötverbindungen bei der Ausgestaltung diesbezüglicher Kontakte muss ein Bandleiter ausreichend verzinnt und mit Flussmittel versehen werden. Diesbezüglich bekannte Technologien des Aufwalzens von Lötzinn führen zu einer nicht ausreichenden Haftung im Vorverarbeitungsprozess bzw. beim Auflöten zu unerwünschter Blasenbildung. Bei einem Verzinnen im Flüssig-Zinnbad ergibt sich oft der Nachteil, dass die Zinnmenge nicht ausreichend oder unregelmäßig verteilt ist. Weiterhin muss Flussmittel in diesem Fall separat aufgebracht werden. Letztendlich ist eine vorverzinnte Litze nicht schweißbar, was dann von Nachteil ist, wenn auf die Bandlitze ein starrer mechanischer Kontakt oder ein Steckverbinder oder ein ähnliches Mittel durch Verschweißen aufzubringen ist.

Aus der DE 10 2009 033 406 A1 ist ein Röhrenlot vorbekannt. Dieses Röhrenlot besteht aus einem Lotmaterial in Form eines Hohldrahts. Der Hohldraht selbst ist mit einer Seele aus einem speziellen Flussmittel gefüllt. Ein derartiges Röhrenlot ist durch das im Lot integrierte Flussmittel sehr praktisch und einfach in der Handhabung. Aufgrund der abstimmbaren Menge zwischen Lotmaterial und Flussmittel steht jeweils ein optimales Verhältnis für den jeweiligen Lötprozess bzw. unter Berücksichtigung der Lotlegierung zur Verfügung.

Bekannt ist darüber hinaus ein Lotmittel zur Verwendung beim Weichlöten, umfassend eine massive Form eines Weichlotmaterials, dessen äußere Oberfläche teilflächig oder ganzflächig mit einer festhaftenden und nicht klebenden Beschichtung aus einem nicht korrosiv wirkenden Flussmittel versehen ist, gemäß DE 20 2007 002 140 U1.

Bei dem Verfahren zum Anlöten von Anschlussdrähten an insbesondere keramische Bauelemente gemäß DE 196 36 577 C1 wird vor dem Anlöten ein Lotband auf dem zu verlötenden Anschlussdraht aufgebracht. Das Lotband selbst ist mit einem Flussmittel versehen und wird unter Zuhilfenahme einer Vorrichtung mittels eines mechanischen Biegevorgangs auf den Anschlussdraht aufgebracht. Durch die Aufbringung des mit Flussmittel gefüllten Lotbandes auf den zu verlötenden Anschlussdraht wird eine exakt definierbare Lotmenge durch eine entsprechende Lotbandbreite bzw. -dicke erreicht, während andererseits eine exakte Position des Lotes gegeben ist. Ein separater Auftrag von Flussmittel ist nicht notwendig, da sich das Flussmittel selbst innerhalb des Lotbandes befindet.

Aus der DE 689 15 543 T2 ist eine Lötmittelauflegevorrichtung bekannt, die zumindest teilweise ein klassisches Vorverzinnen entbehrlich machen soll. Diesbezüglich ist ein Flächenkörper vorhanden, der eine Falzlinie besitzt. Weiterhin wird eine Menge von Lot auf dem Flächenkörper positioniert. Durch Falten kann dann der Flächenkörper auf oder an der Oberfläche eines Gegenstands aufgebracht werden. Ergänzend ist gesichert, dass das erwärmte Lot in eine definierte Richtung senkrecht zur Schwächungslinie bzw. Falzlinie fließt. Die vorbekannte Vorrichtung soll sich insbesondere zum Aufbringen von Lot auf flache Gegenstände eignen, und zwar wiederum insbesondere zum Aufbringen von Lot auf eine Anordnung von elektrischen Leitern in Form abisolierter Flachleiter mit Viereck- oder Rechteckquerschnitt. Das auf dem Flächenkörper befindliche Lot weist bevorzugt noch ein geeignetes Flussmittel auf und besitzt einen Klebstoff, der die Funktion besitzt, die Vorrichtung in ihrer Lage zu halten, wenn ein Erhitzungsprozess stattfindet, um das Lot zum Schmelzen und Fließen zu bringen.

Den bekannten Verfahren und Vorrichtungen ist somit gemein, dass üblicherweise die Lotlegierung bzw. das Lotmittel nebst Flussmittel von außen auf einen elektrischen Leiter oder Kontakt aufgebracht wird. Dies ist bei üblichen starren Leitern oder verseilten Litzenleitern mit den im letzteren Fall wirksamen Kapillarkräften durchaus zielführend. Bei Bandlitzenleitern führen die bekannten Techniken jedoch zu Problemen mit der Folge, dass zusätzliche Lötdepots angelegt werden müssen oder aber ein Nachverzinnen erforderlich ist. Ein weiteres Problem ergibt sich dadurch, dass vorverzinnte Bandlitzenmaterialien nicht durch Schweißen mit Kontakten, insbesondere Fahrzeug-Steckkontakten oder dergleichen verbindbar sind.

Aus der US 6,730,848 B1 ist es bekannt, einen metallisierten Gewebeschlauch mit einem Lot zu füllen und anschließend über eine Presskraft eine Umformung hin zu einem Bandlitzenschlauch zu bewerkstelligen, wobei durch eine Hitzeeinwirkung bis zum Schmelzpunkt des eingebrachten Lotes eine spätere leichte Ausführung von Kontaktverbindungsstellen erfolgen kann, ohne dass zusätzlich Lötdepots notwendig werden. Der Oberbegriff der Ansprüche 1 und 6 basiert auf diesem Dokument.

Zum Stand der Technik sei darüber hinaus noch auf die EP 0 711 628 A1 und die US 1,980,890 A verwiesen.

Aus dem Vorgenannten ist es daher Aufgabe der Erfindung, ein weiterentwickeltes Verfahren zum gleichmäßigen Beschichten eines metallischen oder metallisierten Gewebeschlauches mit einem Lot oder einem Lot- und Flussmittel anzugeben, welches die zum Einsatz kommende Lotmenge minimiert, weiterhin das Anschweißen von elektrischen Kontakten nicht nachteilig beeinflusst und das Vorsehen einzelner Lötdepots entbehrlich macht.

Darüber hinaus ist es Aufgabe der Erfindung, eine geeignete Vorrichtung zur Durchführung des zu schaffenden Verfahrens anzugeben.

Die Lösung der Aufgabe der Erfindung erfolgt verfahrensseitig durch eine Lehre gemäß Definition des Anspruchs 1 sowie vorrichtungsseitig durch die Merkmalskombination nach Anspruch 6.

Verfahrensseitig wird demnach von einer gleichmäßigen Beschichtung eines metallischen oder metallisierten Gewebeschlauches für elektrische Zwecke mit einem Lot oder einem Lot-Flussmittel ausgegangen. Das gleichmäßige Beschichten kann dabei unmittelbar als Ergebnis des Verfahrens oder eines nachfolgenden Behandlungsschritts, insbesondere eines Erhitzens des Lotes oder der eingesetzten Lotlegierung sein. Maßgeblich ist das gezielte Vorsehen einer technologisch optimalen Lotmenge nebst Flussmittel, ohne dass beim eigentlichen Lötprozess auf ein Ergänzungslot, das separat zugeführt werden muss, oder ein sonstiges Lotdepot zurückgegriffen werden muss.

Das eigentliche Lot wird in Stangen- oder Röhrenform bereitgestellt, wobei der Außendurchmesser oder die Querschnittsfläche der Stange oder der Lotröhre kleiner als der Innendurchmesser oder die Innenquerschnittsfläche des Gewebeschlauches zu wählen ist.

Unter Beachtung der oben genannten Bedingung wird dann das Lot in Stangen-oder Röhrenform in einen Längsabschnitt des Gewebeschlauchhohlraums eingeschoben und im Gewebeschlauchhohlraums fixiert.

Im Anschluss daran kann ein an sich bekanntes Weiterverarbeiten des Gewebeschlauches, insbesondere Erhitzen bis zum Schmelzpunkt des eingebrachten Lotes erfolgen. Dieser Erhitzungsvorgang kann beim Behandeln des Bandlitzen-Gewebeschlauches vorgenommen haben, aber auch erst beim Einsatz des Gewebeschlauches, z.B. zur Kontaktierung eines Kontaktmittels auf einer Fahrzeugscheibe.

Erfindungsgemäß ist es möglich, entweder im Bereich abgelängter Abschnitte des metallischen Gewebeschlauches eine entsprechende Längenportion von Lot einzuschieben oder aber auch nur Endabschnitte mit eingeschobenem Lot zu füllen, wobei andere Abschnitte des Gewebeschlauches frei bleiben und für Quetschkontakte, zum Verschweißen mit Steckkontakten oder Ähnlichem nutzbar sind.

Durch die Wahl der Länge und des Durchmessers bzw. des Querschnitts des einzubringenden Lotes nebst Flussmittel sind bezogen auf die jeweiligen Abmessungen des Gewebeschlauches immer reproduzierbare Verhältnisse für das spätere Verlöten und/oder Verzinnen geschaffen. Diesbezügliche Fehler beim Lötprozess können ausgeschlossen werden.

Zum leichteren Einbringen des Lotes in Stangen- oder Röhrenform wird der Gewebeschlauch quasi zur Öffnung seines Hohlraums mechanisch belastet und aufgeweitet. So kann eine Bandlitze durch Druckkraft einer Aufweitung unterzogen werden.

Für das Einschieben des Lotes kommt erfindungsgemäß ein Dorn zum Einsatz, der in einen stirnseitigen Öffnungsbereich des Gewebeschlauches eingebracht oder diesem Öffnungsbereich angenähert wird, wobei über eine im Dorn befindliche Öffnung das Lot in den Hohlraum eingebracht wird.

Hier besteht die Möglichkeit, dass das Lot mit entsprechender Viskosität, z.B. zähflüssig über den Dorn, der in diesem Fall als Düse wirkt, in das Innere des Hohlraums des Gewebeschlauches gelangt. Auch ist diesbezüglich denkbar, dass das Lot oder Lot-Flussmittel-Gemisch eine pastöse Form besitzt und in diesem pastösen Zustand in den Gewebeschlauch eingebracht wird und dort einer gewissen Aushärtung unterliegt.

Alternativ kann quasi in kinematischer Umkehr der Gewebeschlauch über das stangen-oder röhrenförmige Lot geschoben werden. Im Anschluss an die vorbeschriebenen Schritte ist auf den Gewebeschlauch eine Press- oder Druckkraft zum Verformen des Gewebeschlauches und Fixieren des Lotes aufbringbar.

Das Einschieben des Lotes und/oder das Öffnen der Querschnittsfläche des Hohlraums des Gewebeschlauches kann druckluftunterstützt vorgenommen werden.

Wie bereits erwähnt, kann dem Lot ein Flussmittel beigemischt werden. Beim Einsatz eines Röhrenlots befindet sich das Flussmittel in definierter Menge im Inneren des Röhrenlots und bildet dessen Seele.

Vor dem Einbringen von Lot in den Gewebeschlauch kann mindestens ein elektrischer Kontakt mit dem Gewebeschlauch verbunden, insbesondere verschweißt werden.

Im Ergebnis entsteht ein metallischer oder metallisierter Gewebeschlauch, insbesondere ein Bandlitzenschlauch mit im Schlauchinneren befindlicher Lot- oder Lot-Flussmittel-Menge, welche sich über mindestens einen Schlauchlängsabschnitt erstreckt.

Diese Lot-Flussmittel-Menge ist bevorzugt ein Röhrenlot mit der vorerwähnten Seele aus Flussmittel.

Zur Durchführung des erfindungsgemäßen Verfahrens findet eine Vorrichtung Verwendung, die zunächst eine Aufnahmeeinheit für einen metallischen oder metallisierten, elektrisch leitfähigen Gewebeschlauch umfasst. Mit Hilfe der Aufnahmeeinheit ist sichergestellt, dass eine Querschnittsöffnung eines Endes des Schlauchhohlraums freiliegt.

Weiterhin ist ein Lotzuführdorn ausgebildet, welcher mit seiner Dornspitze an die Querschnittsöffnung heranführbar ist.

Über das Innere des Lotzuführdorns ist ein Röhrenlot mechanisch in den Schlauchhohlraum verbringbar.

Weiterhin ist mindestens eine Walze oder Presse zur Ausübung einer Verformungskraft vorgesehen, um einen festen mechanischen Verbund zwischen Röhrenlot und Gewebeschlauch zu erhalten. Ferner sind Mittel zum Ablängen des geschaffenen Verbunds vorhanden.

Die Erfindung soll nachstehend anhand eines Ausführungsbeispiels sowie unter Zuhilfenahme von Figuren näher erläutert werden.

Hierbei zeigen:
- Fig. 1: a) bis c) eine Querschnittsdarstellung einer üblichen Bandlitze in Rechteckform, die rechteckförmige Bandlitze in aufgedrücktem Zustand zum Erhalt eines Zugangs zum Inneren der Litze und einen Litzenschlauch mit quasi kreisförmigem Querschnitt;
- Fig. 2: eine Längsansicht eines Litzenschlauches mit aufgeschweißtem Flachsteckkontakt;
- Fig. 3: eine Längsansicht des Litzenschlauches mit Kontakt sowie Lotzuführdorn und Röhrenlot;
- Fig. 4: eine Längsansicht des fertigen Gebildes mit im Inneren des Litzenschlauches mit eingebrachtem Lot vor dem Verpressen;
- Fig. 5: eine Ansicht ähnlich derjenigen nach Fig. 4, jedoch nach dem Verpressen;
- Fig. 6: eine Längsansicht des fertigen Gebildes gemäß zweitem Ausführungsbeispiel mit im Inneren des Litzenschlauches eingebrachten, durchgehenden Röhrenlot;
- Fig. 7: eine Darstellung ähnlich derjenigen nach Fig. 6, jedoch nach dem Verpressen und
- Fig. 8: bis 11 Längsschnittdarstellungen eines Litzenschlauches, wobei gemäß Fig. 8 in das Innere des Litzenschlauches das Röhrenlot eingebracht, gemäß Fig. 9 ein auf Höhe und Breite erfolgendes Verpressen bzw. Walzen des Litzenschlauches mit im Inneren befindlichem Röhrenlot erfolgt, gemäß Fig. 10 das verpresste Gebilde auf Länge geschnitten und gemäß Fig. 11 (Längsschnitt und Querschnitt) das fertige Bandlitzengebilde zur weiteren Verarbeitung zur Verfügung steht.

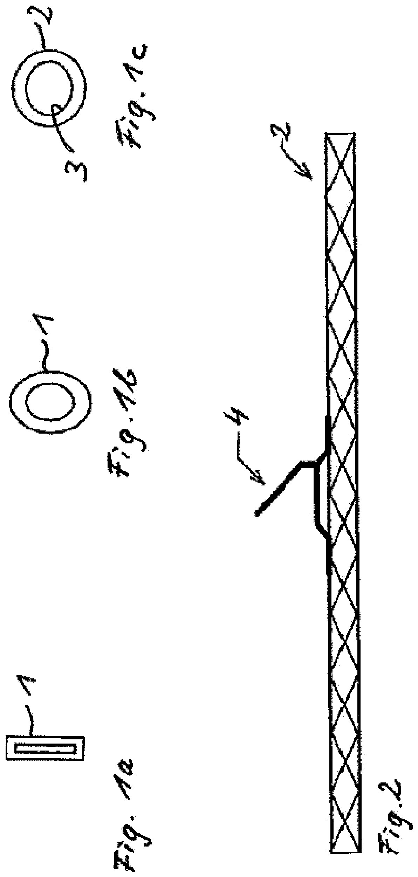

Die Fig. 1a zeigt eine klassische Bandlitze 1 mit rechteckförmigem Querschnitt. Durch Einwirkung von Druckkräften in Richtung Schwerpunkt der Querschnittsfläche kann die Bandlitze 1 in einen aufgedrückten Zustand verbracht werden, wie dies die Fig. 1b zeigt. Ein Litzenschlauch 2 gemäß Fig. 1c weist einen im Wesentlichen kreisförmigen Querschnitt mit einem kreisförmigen Hohlraum 3 auf.

Ein solcher Hohlraum, jedoch in angenäherter Litzenform, ergibt sich auch nach dem Aufdrücken der Bandlitze 1 gemäß Fig. 1b.

Wie in der Fig. 2 als Prinzipdarstellung ersichtlich, kann auf den Litzenschlauch 2 ein starrer Kontakt 4 durch oberflächenseitige Verschweißung aufgebracht werden.

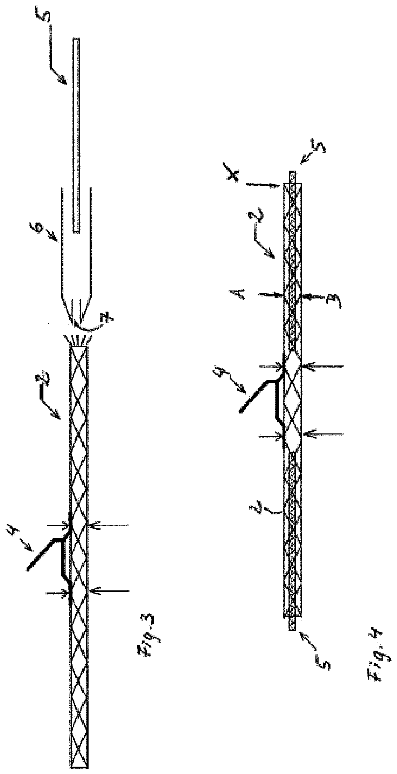

Die Darstellung nach Fig. 3 verdeutlicht, wie ein Lot 5 in Stangen- oder Röhrenform, insbesondere ein sogenanntes Röhrenlot, mit Hilfe eines Lotzuführdorns 6 in den Hohlraum 3 des Litzenschlauches 2 eingebracht werden kann.

Konkret wird das Lot 5 über den Dorn 6, der eine Öffnung 7 besitzt, in den Hohlraum 3 des Litzenschlauches 2 eingeschoben bzw. durch den Litzenschlauch 3 hindurchgeschoben.

Das Ergebnis einer derartigen Behandlung ist in der Fig. 4 dargestellt.

Durch Aufbringen einer Presskraft in Richtung der Pfeildarstellung A und B wird der Litzenschlauch 2 in eine endgültige Form, z.B. Bandlitzenform mit rechteckförmigem Querschnitt, überführt und hierbei gleichzeitig das Röhrenlot 5 im Inneren fixiert. An den Stellen X kann dann ein Ablängen des Litzenschlauches 2 in an sich bekannter Weise erfolgen.

Mit der im Ausführungsbeispiel beschriebenen Lösung kann der Wunsch von Kunden erfüllt werden, zum Auflöten von Kontakten auf z.B. Kraftfahrzeugscheiben Bandlitzenkontakte für Heizfelder ohne Lötdepots bereitzustellen. Die Bandlitze ist nach Aufbringen eines Kontakts durch Anschweißen vollkommen mit Zinn im Innenvolumen versehen, so dass ein problemloses Auflöten auf der vorerwähnten Fahrzeugscheibe und dort vorhandener Kontaktfläche möglich ist. Eine Bandlitze in Form eines Kupfergewebeschlauches wird, wie figürlich gezeigt, an den gegenüberliegenden Enden aufgedrückt (siehe Fig. 1b) und auf den gelochten Führungsdorn bzw. die Dornspitze geschoben. Über den Dorn kann dann das Lot durchmesserangepasst in den Kupfergewebeschlauch eingeschoben werden. Da es sich beim eingesetzten Lot um Röhrenlot mit Flussmittel handelt, erfolgt kein sogenanntes Nachbefluxen.

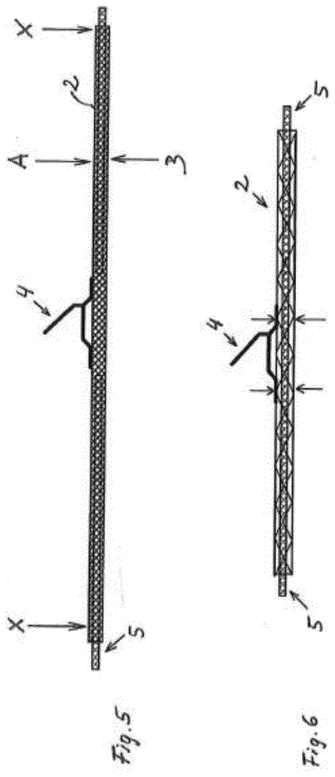

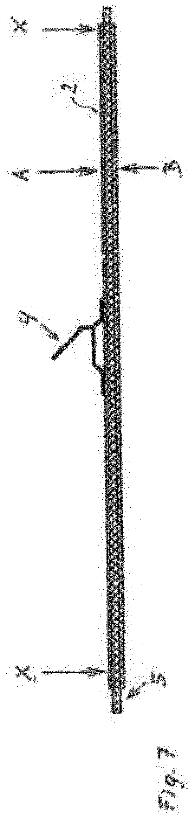

Nach Walzen oder Verpressen auf Höhe und Breite (siehe Fig. 5 und 7) wird dann der Kupfergewebeschlauch auf Länge geschnitten. Selbstverständlich kann anstelle von Bandlitze auch ein Rundschlitzenschlauch (siehe Fig. 1c) mit entsprechendem Querschnitt verarbeitet werden, was die Herstellung der Bandlitzenkontakte weiter vereinfacht.

Da zum Einbringen des Zinns in das Innere des Litzenschlauchs bzw. der Bandlitze keine Erhitzung erforderlich ist, ergibt sich eine energetische Ersparnis und ein sauberes Arbeiten.

Bei dem erfindungswesentlichen Ausführungsbeispiel gemäß den Fig. 4 und 5 wird das Röhrenlot 5 nicht durchgängig in den Litzenschlauch 2 eingebracht. Der Bereich, in dem der Kontakt 4 angebracht wird, kann bezüglich des Röhrenlots 5 frei bleiben.

Beim nicht erfindungswesentlichen Ausführungsbeispiel gemäß den Fig. 6 und 7 hingegen durchzieht das Röhrenlot 5 das gesamte Innere des Litzenschlauches 2, was z.B. beim klassischen Verlöten des Kontakts 4 von Vorteil ist.

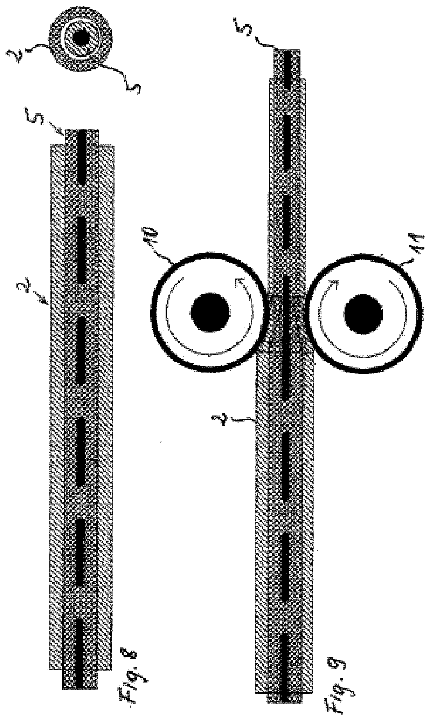

Mit Hilfe der Fig. 8 bis 11 soll das Verfahren der Bereitstellung des metallisierten Gewebeschlauches bzw. Bandschlitzenschlauches näher erläutert werden.

Ein klassischer Litzenschlauch 2 wird, gegebenenfalls nach einer entsprechenden Aufweitung, im Inneren mit dem Röhrenlot 5 versehen. Die Querschnittsdarstellung (rechtseitige Abbildung nach Fig. 8) macht deutlich, dass zum leichteren Einbringen des Röhrenlots 5 ein Freiraum zwischen dem Außendurchmesser des Röhrenlots 5 und dem Innendurchmesser des Litzenschlauches 2 verbleibt.

Im folgenden Schritt gemäß Fig. 9 wird das Gebilde aus Litzenschlauch 2 mit im Inneren befindlichen Röhrenlot 5 mittels eines Walzenpaars 10 und 11 auf Breite bzw. unter Rückgriff eines seitlichen Anschlags oder einer in der Figur nicht dargestellten seitlichen Walze auf Breite und Höhe gewalzt, d.h. einer Verpressung unterzogen. Damit ist einerseits das Röhrenlot 5 sicher im Inneren des Litzenschlauches 2 fixiert und zum anderen die gewünschte Bandstruktur des Litzenschlauches 2 erzeugbar.

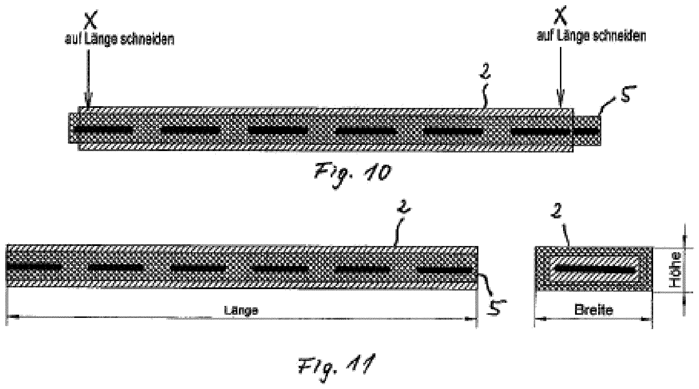

Das diesbezüglich verpresste bzw. gewalzte Gebilde wird gemäß Fig. 10 entsprechend der technischen oder kundenseitigen Anforderung auf Länge geschnitten und steht dann, wie in der Fig. 11 als Längs- und Querschnittsdarstellung gezeigt, zur weiteren Verarbeitung zur Verfügung.

## Patentansprüche

1. Verfahren zum gleichmäßigen Beschichten eines metallischen oder metallisierten Gewebeschlauches, mit einem Lot oder einem Lot- und Flussmittel, wobei
das Lot in Stangen- oder Röhrenform (5) bereitgestellt wird, wobei der Außendurchmesser oder die Querschnittsfläche der Stange oder der Röhre kleiner als der Innendurchmesser oder die Innenquerschnittsfläche des Gewebeschlauches (1) gewählt ist, mit nachfolgendem Einschieben des Lotes (5) in einen Gewebeschlauchhohlraum (3), wobei im Anschluss auf den Gewebeschlauch (1; 2) eine Press- oder Druckkraft (A; B) zum Verformen des Gewebeschlauches (2) und Fixieren des Lotes (5) aufgebracht wird, um hierbei die endgültige Bandlitzenform zu erhalten sowie an sich bekanntes Weiterverarbeiten des Gewebeschlauches (2), insbesondere Erhitzen bis zum Schmelzpunkt des eingebrachten Lotes,
**dadurch gekennzeichnet, dass**
der Gewebeschlauch (2) zur Öffnung des Hohlraums (3) mechanisch belastet und aufgeweitet wird sowie
für das Einschieben des Lotes (5) ein Dorn (6) in einen stirnseitigen Öffnungsbereich des Gewebeschlauches (1; 2) eingebracht wird, wobei über eine im Dorn (6) befindliche Öffnung (7) das Lot (5) in den Hohlraum (3) eingebracht wird, das Einbringen des Lotes (5) jedoch nicht durchgängig sondern im Bereich eines Kontaktes freibleibend erfolgt

2. Verfahren nach einem der vorangegangenen Ansprüche,
**dadurch gekennzeichnet, dass**
das Einschieben des Lotes (5) druckluftunterstützt erfolgt.

3. Verfahren nach einem der vorangegangenen Ansprüche,
**dadurch gekennzeichnet, dass**
dem Lot ein Flussmittel beigemischt oder beigegeben ist.

4. Verfahren nach einem der vorangegangenen Ansprüche,
**dadurch gekennzeichnet, dass**
das Röhrenlot (5) in seinem Inneren ein Flussmittel aufweist.

5. Verfahren nach einem der vorangegangenen Ansprüche,
**dadurch gekennzeichnet, dass**
vor dem Einbringen von Lot in den Gewebeschlauch mindestens ein elektrischer Kontakt (4) mit dem Gewebeschlauch (2) verbunden, insbesondere verschweißt wird.

6. Vorrichtung zum Durchführung eines Verfahrens nach einem der Ansprüche 1 bis 5,
**dadurch gekennzeichnet, dass**
eine Aufnahmeeinheit für einen metallischen oder metallisierten Gewebeschlauch (1; 2) vorgesehen ist, welche eine Querschnittsöffnung eines Endes eines Schlauchhohlraums (3) freilegt,
ein Lotzuführdorn (6) ausgebildet ist, welcher mit seinem Dornende an die Querschnittsöffnung heranführbar ist,
weiterhin über das Innere des Lotzuführdorns (6) ein Röhrenlot mechanisch in den Schlauchhohlraum (3) verbringbar ist und mit mindestens einer Walze oder Presse die Ausübung einer Verformungskraft (A; B) erfolgt, um einen festen Verbund zwischen Röhrenlot (5) und Gewebeschlauch (1; 2) zu erhalten sowie mit Mitteln (X) zum Ablängen des Verbundes.

## Claims

1. A method for evenly coating a metal or metalized braided hose with a solder or with a solder and flux agent,
wherein the solder is provided in rods or tubes (5), wherein an outer diameter or a cross-sectional surface of the rod or the tube is smaller than an inner diameter or an inner cross-sectional surface of the braided hose (1), with subsequent insertion of the solder (5) into a braided hose cavity (3), wherein a pressing force or compression force (A; B) is subsequently applied to the braided hose in order to deform the braided hose (2) and fix the solder (5) in order obtain a final strand shape and further processing the braided hose (2), in particular up to a melting point of the introduced solder, **characterized in that**
the braided hose (2) is mechanically loaded and expanded in order to open the cavity (3), and
a mandrel (6) is introduced into an open face portion of the braided hose (1; 2) in order to insert the solder (5), wherein the solder (5) is introduced into the cavity (3) through an opening (7) that is arranged in the mandrel (6), but the solder (5) is not introduced continuously but so that a contact portion remains clear.

2. The method according to one of the preceding claims,
**characterized in that**
the insertion of the solder (5) is supported by compressed air.

3. The method according to one of the preceding claims,
**characterized in that**
a flux agent is mixed into or added to the solder.

4. The method according to one of the preceding claims,
**characterized in that**
the tube solder (5) includes a flux agent in its interior.

5. The method according to one of the preceding claims,
**characterized in that**
at least one electrical contact (4) is connected with the braided hose (2), in particular welded therewith, before inserting the solder into the braided hose.

6. A device for performing the method according to one of the claims 1 through 5, **characterized in that**
a receiving unit for a metal or metalized braided hose (1; 2) is provided, wherein the receiving unit releases a cross-sectional opening of an end of a hose cavity (3),
a solder feed mandrel (6) is provided which is movable with its mandrel end to the cross-section opening,
a tube solder is mechanically movable into the hose cavity (3) through the interior of the solder feed mandrill (6) and a deformation force (A; B) is imparted by at least one roller or press in order to obtain a fixed interconnection between the tube solder (5) and the braided hose (1; 2), and with devices (X) for cutting the interconnection to length.

## Revendications

1. Procédé de revêtement régulier d'une gaine en tissu métallique ou métallisé, par un apport de brasage ou un apport de brasage et un flux, dans lequel
l'apport de brasage est fourni en forme de barreau ou de tube (5), le diamètre extérieur ou la surface de section transversale du barreau ou du tube étant choisi(e) inférieur(e) au diamètre intérieur ou à la surface de section transversale intérieure de la gaine en tissu (1),
par introduction successive de l'apport de brasage (5) dans un creux (3) de la gaine en tissu, et ensuite
une force de pressage ou de pression (A ; B) est appliquée sur la gaine en tissu (1 ; 2) pour déformer la gaine en tissu (2) et pour fixer l'apport de brasage (5), afin d'obtenir ainsi la forme définitive de cordon en bande, et
par une poursuite connue en soi du traitement de la gaine en tissu (2), en particulier par échauffement jusqu'à un point de fusion de l'apport de brasage introduit,
**caractérisé en ce que**
la gaine en tissu (2) est chargée mécaniquement et évasée pour ouvrir le creux (3), et ainsi
un mandrin (6) est introduit dans la zone d'ouverture côté frontal de la gaine en tissu (1 ; 2) pour l'introduction de l'apport de brasage (5), et
via une ouverture (7) située dans le mandrin (6), l'apport de brasage (5) est introduit dans le creux (3), et l'introduction de l'apport de brasage (5) ne s'effectue pas en continu, mais de manière à laisser dégagée une zone d'un contact.

2. Procédé selon la revendication précédente,
**caractérisé en ce que**
l'introduction de l'apport de brasage (5) s'effectue en étant assisté par de l'air comprimé.

3. Procédé selon l'une des revendications précédentes,
**caractérisé en ce que**
un flux est mélangé avec ou ajouté à l'apport de brasage.

4. Procédé selon l'une des revendications précédentes,
**caractérisé en ce que**
l'apport de brasage (5) en forme de tube présente un flux dans son intérieur.

5. Procédé selon l'une des revendications précédentes,
**caractérisé en ce que**
avant l'introduction de l'apport de brasage dans la gaine en tissu, au moins un contact électrique (4) est relié à la gaine en tissu (2), en particulier par soudage.

6. Dispositif pour mettre en oeuvre un procédé selon l'une des revendications 1 à 5,
**caractérisé en ce que**
il est prévu une unité de logement pour une gaine en tissu métallique ou métallisé (1 ; 2), qui libère une ouverture de section transversale d'une extrémité d'un creux de gaine (3),
il est prévu un mandrin d'alimentation en apport de brasage (6) dont une extrémité est susceptible d'être rapprochée de l'ouverture de section transversale,
en outre un apport de brasage en forme de tube peut être amené mécaniquement dans le creux de gaine (3) par l'intérieur du mandrin d'alimentation en apport de brasage (6), et l'application d'une force de déformation (A ; B) s'effectue au moyen d'au moins un rouleau ou d'une presse, afin d'obtenir un composite ferme entre l'apport de brasage en forme de tube (5) et la gaine en tissu (1 ; 2), ainsi que des moyens (X) pour mettre à longueur le composite.
